# EUROPEAN PATENT SPECIFICATION

(11) **EP 2 046 068 B1**
(45) Date of publication and mention of the grant of the patent: **24.10.2012**
(21) Application number: 06781340.2
(22) Date of filing: 20.07.2006
(51) Int. Cl.: H04W 48/20, H04W 68/02

(54) **Improving the reception of a paging channel, PCH, at a moving user equipment**
Verbesserung des Empfangs eines Paging-Kanals, PCH, auf ein sich bewegendes Nutzergerät
Amélioration de la réception d'un canal de paging, PCH, à un équipement d'utilisateur mobile

(43) Date of publication of application: 08.04.2009
(73) Proprietor: Fujitsu Limited, Kawasaki-shi, Kanagawa 211-8588 (JP)
(72) Inventor: KOBAYASHI, Yutaka, Kawasaki-shi Kanagawa 211-8588 (JP)
(74) Representative: Weihs, Bruno Konrad
(86) International application number: PCT/JP2006/314380
(87) International publication number: WO 2008/010277

(56) References cited:
- JP-A- 2000 032 564
- JP-A- 2002 374 550
- JP-A- 2004 112 148
- JP-A- 2005 505 983
- US-A1- 2004 043 798
- US-A1- 2005 048 982
- US-A1- 2005 288 040
- US-A1- 2006 133 269
- "Universal Mobile Telecommunications System (UMTS); User Equipment (UE) procedures in idle mode and procedures for cell reselection in connected mode (3GPP TS 25.304 version 7.0.0 Release 7); ETSI TS 125 304", ETSI STANDARDS, LIS, SOPHIA ANTIPOLIS CEDEX, FRANCE, vol. 3-R2, no. V7.0.0, 1 March 2006 (2006-03-01), XP014034277, ISSN: 0000-0001

## Description

### Technical Field

The present invention relates to a mobile communication terminal used in a mobile communication system such as a cellular phone system, a wireless LAN, etc., and incoming data detecting method and program, which are executed in the mobile communication terminal, and more particularly, to a mobile communication terminal, which extends a standby time with a discontinuous reception control, in a CDMA (Code Division Multiple Access) system, and incoming data detecting method and program, which are executed in the mobile communication terminal.

### Background Art

Conventionally, the battery of a mobile communication terminal is saved with a discontinuous control in a W-CDMA (Wideband CDMA) mobile communication system.

With the discontinuous control, a mobile communication terminal is controlled with a PICH (Paging Indicator CHannel), and a PCH (Paging CHannel) that is a transport channel mapped on an SCCPCH (Secondary Common Control Physical CHannel).

With the PICH, a short PI (Paging Indicator) for notifying a mobile communication terminal of whether or not incoming information exists is transmitted. Only if it is notified to the mobile communication terminal that the incoming data exists, the mobile communication terminal receives the PCH corresponding to the PI. Namely, the mobile communication terminal receives the PICH prior to the reception of the PCH. The PICH is a channel for transmitting PI (Paging Indicator) data for which error correction coding (channel coding) is not made. Then, the mobile communication terminal determines whether or not Paging is made based on the PI data received with the PICH, and executes a decoding/reproduction process for incoming data by receiving the PCH only if the incoming data is determined to exist. As a result, the mobile communication terminal receives the PCH only if it verifies based on the PICH that the incoming data exists. Otherwise, the mobile communication terminal does not receive the PCH.

The discontinuous reception cycle of a frame in which a PI is mapped is specified with broadcast information of a base station as DRX Cycles Length (discontinuous cycle). The mobile communication terminal also executes in parallel a level measurement process for detecting a cell transition upon receipt of a PI. Furthermore, the mobile communication terminal executes a cell search process for detecting a neighboring cell in a suitable cycle in consideration of the influence of current consumption.

For example, the invention disclosed by Japanese Patent Publication No. 2004-112148 uses broadcast information cached beforehand if a CRC (Cyclic Redundancy Check) results in NG (CRC-NG) upon receipt of broadcast information when a handover is made during the standby state of a mobile communication terminal. As a result, both the duration for receiving broadcast information and the operation time are shortened, whereby power consumption can be reduced. Moreover, the length of time required for a cell reselection can be shortened because the cell reselection can be efficiently made in an environment where the cell reselection often occurs. This increases an incoming rate. The cell reselection is an operation for selecting one optimum reception wave when a mobile communication terminal detects a plurality of reception waves during its transition to a standby state.

The timing of making a conventional cell reselection is described here.

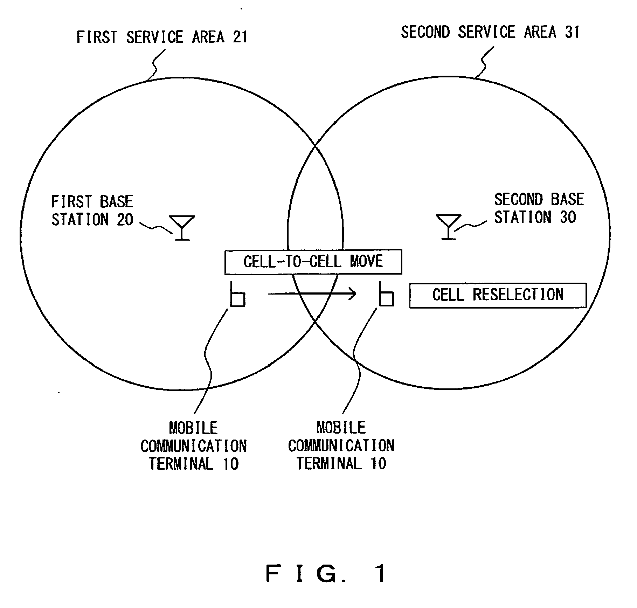

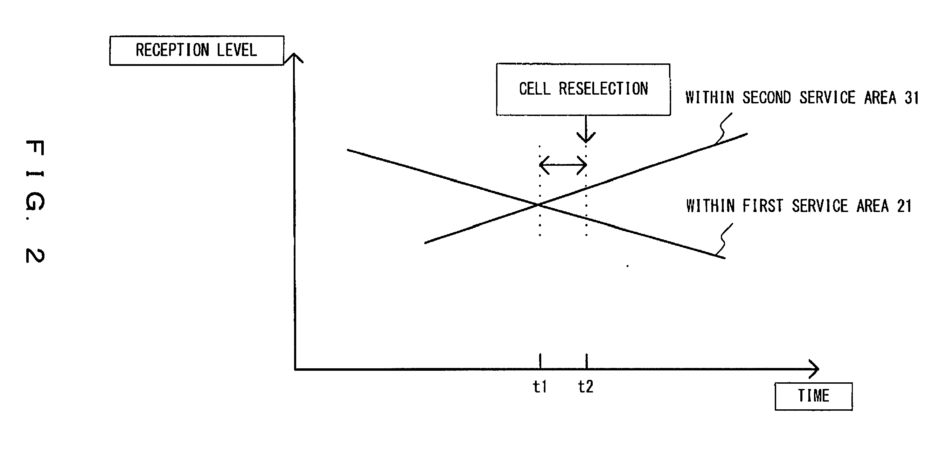

Fig. 1 is a schematic diagram showing a relationship between base stations, service areas, and a mobile communication terminal in conventional technology, whereas Fig. 2 is a schematic diagram showing a relationship between a reception level and a cell reselection in the conventional technology.

In Fig. 1, a mobile communication terminal 10 makes a wireless communication with a first base station 20, which offers a first service area 21, within the first service area 21, and makes a wireless communication with a second base station 30, which offers a second service area 31, within the second service area 31. In an area where the first service area 21 and the second service area 31 overlap, the mobile communication terminal 10 can make a wireless communication with the first base station 20 or the second base station 30 by receiving Paging from the first base station 20 or the second base station 30 in accordance with the position of the mobile communication terminal 10.

When the mobile communication terminal 10 moves from the first service area 21 to the second service area 31, a reception level from the first base station 20 within the first service area 21 drops with the elapse of time during which the mobile communication terminal 10 is moving from the first service area 21 to the second service area 31, and a reception level from the second base station 30 within the second service area 31 rises with the elapse of time during which the mobile communication terminal 10 is moving from the first service area 21 to the second service area 31.

While the reception level within the first service area 21 is higher than that within the second service area 31, the mobile communication terminal 10 makes a wireless communication with the first base station 20. Also in a time period from a time t1 at which the reception level within the first service area 21 and that within the second service area 31 are reversed to a time t2 at which the reception level within the second service area 31 becomes higher than that within the first service area 21 by a predetermined value or more, the mobile communication terminal 10 makes a wireless communication with the first base station 20.

At the time t2 when the reception level within the second service area 31 becomes higher than that within the first service area 21 by the predetermined value or more, the mobile communication terminal 10 still makes a Cell reselection, and starts to make a wireless communication with the second base station 30.

However, the conventional technology has a problem that the mobile communication terminal cannot receive incoming data if it fails to receive a PCH (CRC-NG) despite receiving incoming information with a PI, for example, when the reception environment (active cell) of the mobile communication terminal is degraded.

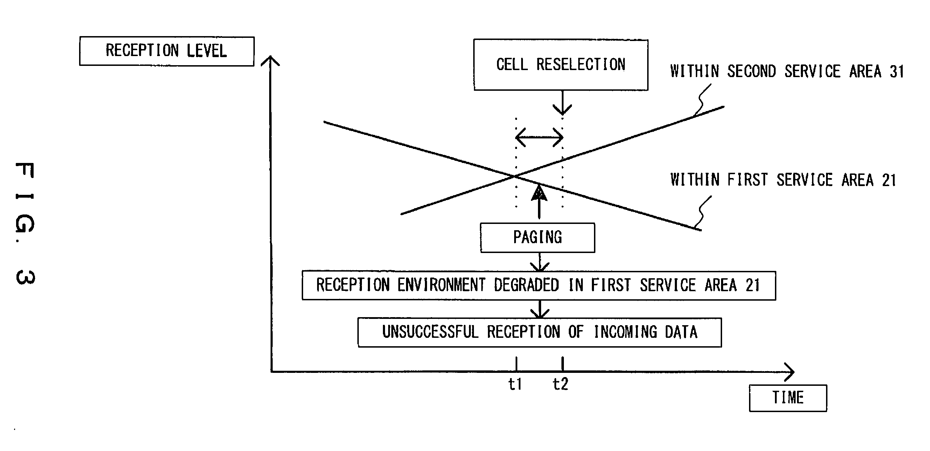

Fig. 3 is a schematic diagram for explaining the case where the mobile communication terminal cannot receive incoming data in the conventional technology.

As shown in Fig. 3, the mobile communication terminal 10 conventionally fails to receive incoming data by attempting to make a wireless communication with the first base station 20 although its reception environment is degraded by a drop in the reception level within the first service area 21, when Paging from the first base station is made in the time period from the time t1 at which the reception level within the first service area 21 and that within the second service area 31 are reversed to the time t2 at which the reception level within the second service area 31 becomes higher than that within the first service area 21 by the predetermined value more.

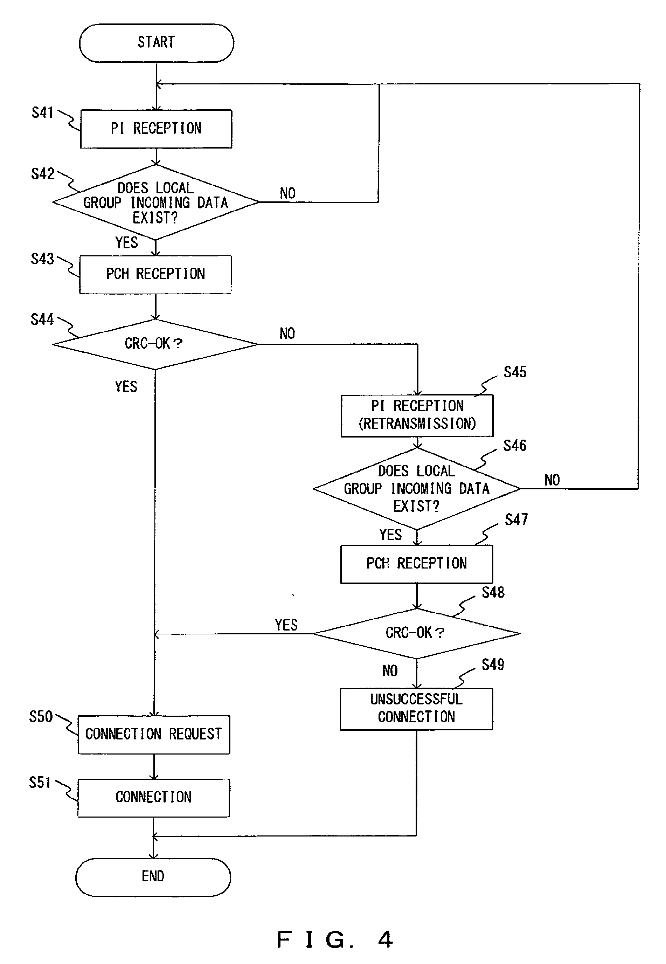

Fig. 4 is a flowchart showing incoming data detection process executed with the conventional technology.

This process is described by assuming the case where the mobile communication terminal 10 moves from the first service area 21 to the second service area 31.

Initially, in step S41, the mobile communication terminal 10 receives a paging indicator (PI) within a paging indicator channel (PICH) in the first service area 21. The PICH is a channel for transferring a paging indicator that is transmitted to notify that incoming data (local group incoming data) exists for any of mobile communication terminals 10 within a service area offered by a base station from the base station to which the mobile communication terminal 10 registers its position. Then, if the mobile communication terminal determines in step S42 that the local group incoming data exists ("YES" in step S42), it receives a paging channel (PCH) transmitted immediately after (for example, after approximately a little less than two milliseconds) the PI. The PCH is a channel for notifying whether or not local group incoming data is paging to the local mobile communication terminal 10.

Next, if the mobile communication terminal 10 determines that it fails to obtain local incoming information (CRC-NG) due to the unsuccessful reception of the PCH caused by the reception environment degraded by the moving of the mobile communication terminal 10 from the inside of the first service area 21 to its outside ("NO" in step S44), the mobile communication terminal 10 receives a retransmitted PI in step S45. If the mobile communication terminal 10 determines in step S46 that the local incoming data exists ("YES" in step S46), it receives a PCH transmitted immediately after the PI.

If the mobile communication terminal 10 determines in step S48 that it again fails to receive the PCH ("NO" in step S48), it determines in step S49 that a connection is unsuccessfully made.

If the mobile communication terminal 10 determines in S44 or S48 that it successfully receives the PCH (CRC-OK) ("YES" in step S44 or S48), it issues a connection request in step S50, and makes a connection in step S51.

"Universal Mobile Telecommunications System (UMTS) ; User Equipment (UE) procedures in idle mode and procedures for cell reselection in connection mode (3GPP TS 25.304 version 7.0.0 Release 7); ETSI TS 125 304" discloses cell selection and cell reselection by a user equipment (UE) in a UMTS telecommunications system.

### Disclosure of Invention

The present invention relates to a mobile communication terminal, an incoming data detecting method and a recording medium according to independent claims 1, 5 and 6, respectively.

The present invention was developed in light of the above described circumstances, and aims at providing a mobile communication terminal that can surely receive incoming data even if the mobile communication terminal fails to receive a PCH despite receiving incoming information with a PI, for example, when the reception environment of the mobile communication terminal is degraded, and incoming data detecting method and program, which are executed in the mobile communication terminal.

The present invention adopts the following configuration in order to overcome the above described problem.

Namely, a mobile communication terminal in one aspect of the present invention is a mobile communication terminal that makes a wireless communication with at least one of a first base station offering a first service area and a second base station offering a second service area, and includes a system information receiving unit for receiving, from the first base station or the second base station, system information including a paging indicator (PI) within a paging indicator channel (PICH) and a paging channel (PCH), and a cell reselecting unit for executing a cell reselection process for switching from a wireless communication with the first base station to a wireless communication with the second base station if the mobile communication terminal fails to obtain local incoming information due to unsuccessful reception of the PCH within the system information, which is made by the system information receiving unit, after receiving a notification that incoming data exists by receiving the PI within the first service area.

With this configuration, the probability of obtaining local incoming information of a paging channel retransmitted from the reselected base station can be increased, and an incoming rate can be improved.

Additionally, it is preferable that the mobile communication terminal according to the present invention executes the cell reselection process in a time period from the unsuccessful reception of the PCH, which is made by the system information receiving unit, to the reception of a retransmitted PI.

Furthermore, it is preferable that the mobile communication terminal according to the present invention further comprises a cell searching unit for executing a cell search process for searching for a third service area offered by a third base station except for the first base station and the second base station if the mobile communication terminal can make a wireless communication only with the first base station when it fails to obtain local incoming information (CRC-NG) due to unsuccessful reception of the PCH, which is made by the system information receiving unit, after receiving a notification that incoming data exists by receiving the PI within the system information received by the system information receiving unit within the first service area.

Still further, it is preferable that the cell reselecting unit executes a cell reselection process for switching from the wireless communication with the first base station to a wireless communication with the third base station, if a communication level with the third base station searched by the cell searching unit is higher than that with the first base station in the mobile communication terminal according to the present invention.

An incoming data detecting method in another aspect of the present invention is a method executed in a mobile communication terminal that makes a wireless communication with at least one of a first base station offering a first service area and a second base station offering a second service area, and includes causing a system information receiving unit to receive, from the first base station or the second base station, system information including a paging indicator (PI) within a paging indicator channel (PICH) and a paging channel (PCH), and causing a cell reselecting unit to execute a cell reselection process for switching from a wireless communication with the first base station to a wireless communication with the second base station if the mobile communication terminal fails to obtain local incoming information due to unsuccessful reception of the PCH, which is made by the system information receiving unit, after receiving a notification that incoming data exists by receiving the PI within the system information received by the system information receiving unit within the first service area.

### Brief Description of Drawings

Fig. 1 is a schematic diagram showing a relationship between base stations, service areas, and a mobile communication terminal in conventional technology;
Fig. 2 is a schematic diagram showing a relationship between a reception level and a cell reselection in the conventional technology;
Fig. 3 is a schematic diagram for explaining the case where a mobile communication terminal cannot receive incoming data in the conventional technology;
Fig. 4 is a flowchart showing incoming data detection process in the conventional technology;
Fig. 5 is a schematic diagram showing a relationship between base stations, service areas, and a mobile communication terminal;
Fig. 6 is a schematic diagram (No. 1) showing a relationship between a PI within a PICH and a PCH;
Fig. 7 is a schematic diagram (No. 2) showing a relationship between a PI within a PICH and a PCH;
Fig. 8 is a schematic diagram (No. 1) for explaining timing at which a cell reselection is made;
Fig. 9 is a schematic diagram (No. 2) for explaining timing at which a cell reselection is made; and
Fig. 10 is a flowchart showing incoming data detection process according to the present invention.

### Best Mode of Carrying Out the Invention

A preferred embodiment according to the present invention is described below with reference to the drawings.

The overview of the present invention is that a mobile communication terminal securely receives a retransmitted paging channel by switching to a cell more suitable than the currently active cell (cell reselection) even if it fails to obtain local incoming information, which is transmitted to the mobile communication terminal, with a paging channel although it detects that incoming data exists by receiving Paging.

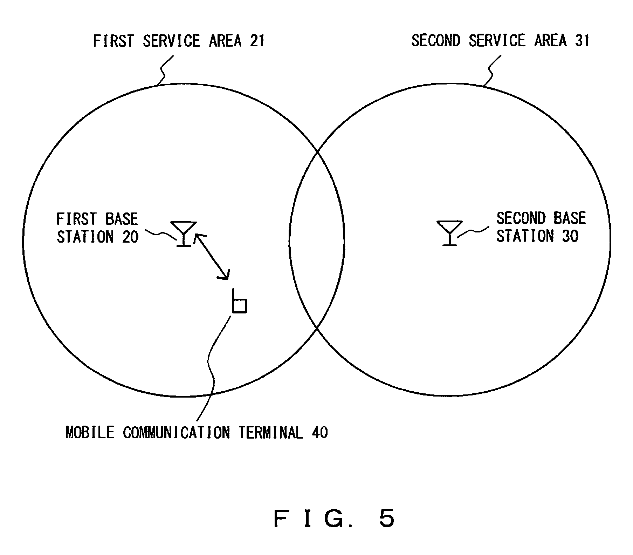

Fig. 5 is a schematic diagram showing a relationship among base stations, service areas, and a mobile communication terminal.

In this figure, similar to the conventional mobile communication terminal 10, the mobile communication terminal 40 makes a wireless communication with the first base station 20, which offers the first service area 21, within the first service area 21, and makes a wireless communication with the second base station 30, which offers the second service area 31, within the second service area 31. In an area where the first service area 21 and the second service area 31 overlap, the mobile communication terminal 40 can make a wireless communication with the first base station 20 or the second base station 30 by receiving Paging transmitted from the first base station 20 or the second base station 30 in accordance with the position of the mobile communication terminal 40, similar to the conventional mobile communication terminal 10.

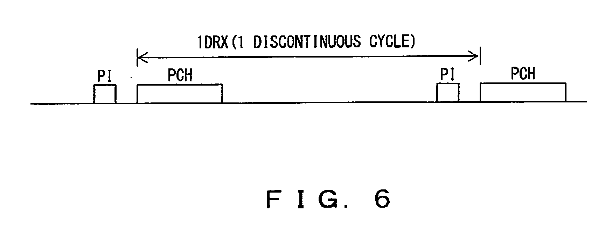

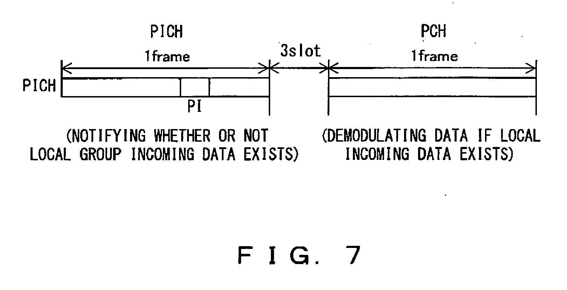

Figs. 6 and 7 are schematic diagrams showing a relationship between a PI within a PICH and a PCH.

The mobile communication terminal 40 receives system information including a PI within a PICH, and a PCH from the first base station 20 or the second base station 30. After receiving the PI, the mobile communication terminal 40 receives the PCH after approximately a little less than two milliseconds from the reception of the PI. However, if the mobile communication terminal 40 fails to receive the PCH, it receives a PI and a PCH in each discontinuous cycle (such as 2.56 seconds) . The PICH is three slots away from the PCH, and the PI is inserted in the PICH. The mobile communication terminal 40 receives such a PICH and a PCH.

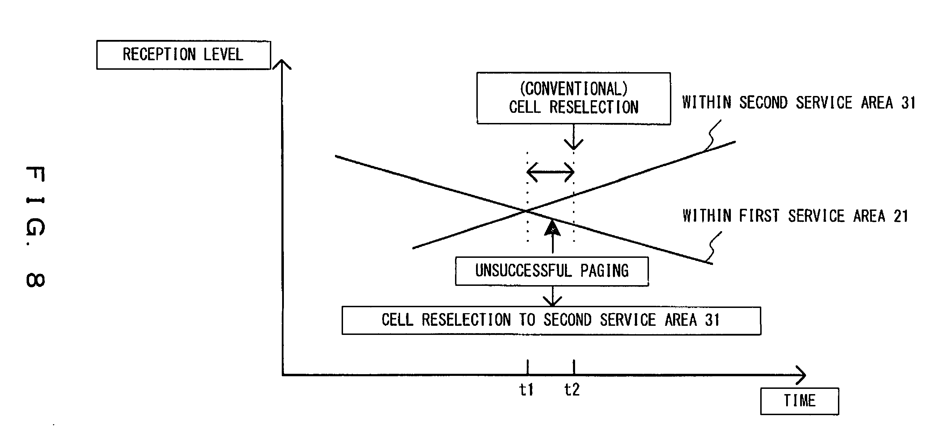

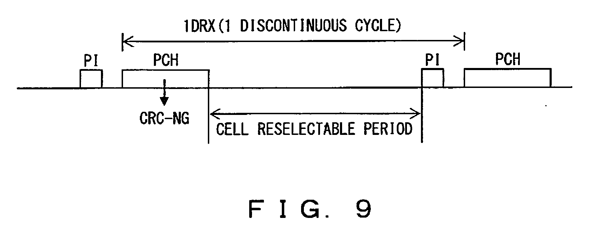

Figs. 8 and 9 are schematic diagrams for explaining timing at which a cell reselection is made.

As shown in Fig. 8, the mobile communication terminal 40 fails to obtain incoming data by attempting to make a wireless communication with the first base station 20 although its reception environment is degraded by a drop in the reception level within the first service area 21 when Paging is made from the first base station in a time period from a time t1 at which the reception level within the first service area 21 and that within the second service area 31 are reversed to a time t2 at which the reception level within the second service area 31 becomes higher than that within the first service area 21 by a predetermined value or more.

Immediately after this, the mobile communication terminal 40 makes a cell reselection. Namely, the mobile communication terminal 40 executes a cell reselection process for switching from the wireless communication with the first base station 20 to that with the second base station 30 at the stage where the mobile communication terminal 40 fails to obtain local incoming information (CRC-NG) due to unsuccessful reception of the PCH after receiving a notification that incoming data exists by receiving the PI within the received system information within the first service area 21. Thereafter, the mobile communication terminal 40 receives a PI and a succeeding PCH within the switched second service area 31.

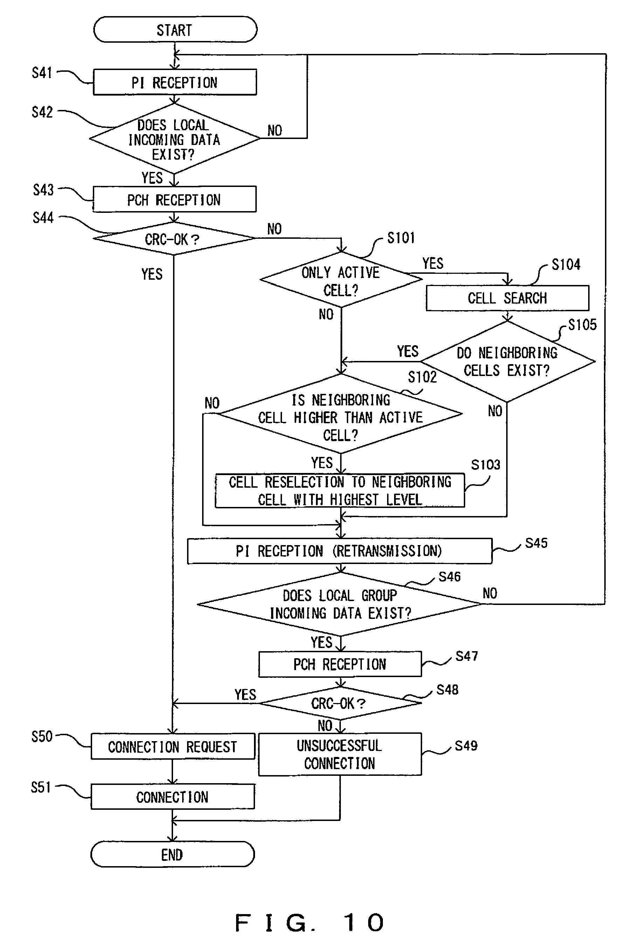

Fig. 10 is a flowchart showing incoming data detection process according to the present invention.

This process is described by assuming the case where the mobile communication terminal 40 moves from the first service area 21 to the second service area 31.

Initially, in step S41, the mobile communication terminal 40 receives a paging indicator (PI) within a paging indicator channel (PICH) in the first service area 21. The PICH is a channel for transferring a paging indicator that is transmitted to notify that incoming data (local group incoming data) exists for any of mobile communication terminals 40 within a service area offered by a base station from the base station to which the mobile communication terminal 40 registers its position. Then, if the mobile communication terminal 40 determines in step S42 that the local group incoming call/data exists ("YES" in step S42), it receives the paging channel (PCH) transmitted immediately after the PI (for example, after approximately a little less than two milliseconds). The PCH is a channel for notifying whether or not the local group incoming data is Paging to the local mobile communication terminal 40.

Next, if the mobile communication terminal 40 determines in step S44 that it fails to obtain the local incoming information (CRC-NG) ("NO" in step S44) due to unsuccessful reception of the PCH caused by the reception environment degraded by the moving of the mobile communication terminal 40 from the inside of the first service area 21 to its outside ("NO" in step S44), it determines whether or not a base station with which the mobile communication terminal 40 can communicate is only the first base station 20 with which the mobile communication terminal 40 is currently making a wireless communication, and whether or not the mobile communication terminal 40 cannot make a wireless communication with the second base station or other base stations (namely, whether or not the mobile communication terminal 40 can communicate only with the active cell). Whether or not the mobile communication terminal 40 can communicate only with the active cell is determined by judging whether or not the number of cells to which a level measurement in a discontinuous state is made is only one cell. The number of active cells is only one cell in the discontinuous state. Therefore, if the number of cells to which the level measurement is made is determined to be two or more, it can be judged that one of the cells is the active cell, and the remaining cells are neighboring cells. Note that the active cell is a service area offered by the base station with which the mobile communication terminal 40 is currently making a wireless communication.

If the mobile communication terminal 40 determines in step S101 that the base station with which the mobile communication terminal 40 can make a communication is not only the active cell ("NO" in step S101), it further determines in step S102 whether or not other neighboring cells (service areas offered by base stations with which the mobile communication terminal 40 is not currently making a wireless communication) with a communication level higher than the active cell exist. If the mobile communication terminal 40 determines that the other neighboring cells with the communication level higher than the active cell exist ("YES" in step S102), it executes the cell reselection process to the neighboring cell (for example, the second service area 31 offered by the second base station 30) with the highest reception level among the neighboring cells in step S103.

In the meantime, if the mobile communication terminal 40 determines in step S101 that the base station with which the mobile communication terminal 40 can make a communication is only the active cell, namely, if the mobile communication terminal 40 can make a wireless communication only with the first base station 20 ("YES" in step S101) when it fails to obtain local incoming information (CRC-NG) due to unsuccessful reception of the PCH after receiving a notification that incoming data exists by receiving the PI within the first service area 21, the mobile communication terminal 40 executes a cell search process for searching for another base station with which the mobile communication terminal 40 can make a wireless communication except for the first base station 20, by way of example, for a third service area offered by a third base station except for the first base station 20 and the second base station 30 in step S104. If the mobile communication terminal 40 determines in step S105 that other base stations with which the mobile communication terminal 40 can make a wireless communication exist except for the first base station 20 ("YES" in step S105), other neighboring cells with their communication level higher than the active cell are determined to exist in step S102. Therefore, the mobile communication terminal 40 executes the cell reselection process to the third service area offered by the third base station in step S103.

Then, in step S45, the mobile communication terminal 40 receives a PI that is retransmitted after the cell reselection process. If the mobile communication terminal 40 determines in step S46 that local group incoming data exists ("YES" in step S46), it receives the PCH transmitted immediately after the PI in step S47.

If the mobile communication terminal 40 determines that it again fails to receive the PCH in step S48 ("NO" in step S48), it determines that a connection is not made in step S49.

In the meantime, if the mobile communication terminal 40 determines that it successfully receives the PCH (CRC-OK) in step S44 or S48 ("YES" in step S44 or S48), it issues a connection request in step S50, and makes a connection in step S51.

The embodiment according to the present invention has been described above with reference to the drawings. However, the present invention is not limited to the above described embodiment, and can adopt various configurations or forms within the scope of the appended claims.

According to the present invention, the probability of successfully receiving a PCH that is retransmitted, for example, when a reception environment is degraded, whereby an incoming rate can be improved.

## Claims

1. A mobile communication terminal (40) that makes a wireless communication with at least one of a first base station (20) offering a first service area (21) and a second base station (30) offering a second service area (31), comprising:
a system information receiving unit for receiving, from the first base station (20) or the second base station (30), system information including a paging indicator PI within a paging indicator channel PICH and a paging channel PCH; and
a cell reselecting unit for executing a cell reselection process for switching from a wireless communication with the first base station (20) to a wireless communication with the second base station (30), **characterized in that**
the cell reselecting unit is adapted to execute the cell reselection process if the mobile communication terminal (40) fails to obtain local incoming information due to unsuccessful reception of the paging channel PCH, which is made by the system information receiving unit, after receiving a notification that incoming data exists by receiving the paging indicator PI within the system information received by the system information receiving unit within the first service area (21).

2. The mobile communication terminal (40) according to claim 1, wherein
the cell reselecting unit executes the cell reselection process in a time period from the unsuccessful reception of the paging channel PCH, which is made by the system information receiving unit, to reception of a retransmitted paging indicator PI.

3. The mobile communication terminal (40) according to claim 1, further comprising
a cell searching unit for executing a cell search process for searching for a third service area offered by a third base station except for the first base station (20) and the second base station (30), if the mobile communication terminal (40) can make a wireless communication only with the first base station (20) when the mobile communication terminal (40) fails to obtain local incoming information due to unsuccessful reception of the paging channel PCH, which is made by the system information receiving unit, after receiving a notification that incoming data exists by receiving the paging indicator PI within the system information received by the system information receiving unit within the first service area (21).

4. The mobile communication terminal (40) according to claim 3, wherein
the cell reselecting unit executes a cell reselection process for switching from the wireless communication with the first base station (20) to a wireless communication with the third base station, if a communication level with the third base station searched by the cell searching unit is higher than a communication level with the first base station (20).

5. Incoming data detecting method executed in a mobile communication terminal (40) that makes a wireless communication with at least one of a first base station (20) offering a first service area (21) and a second base station (30) offering a second service area (31), comprising:
causing a system information receiving unit to receive, from the first base station (20) or the second base station (30), system information including a paging indicator PI within a paging indicator channel PICH and a paging channel PCH; and
causing a cell reselecting unit to execute a cell reselection process for switching from a wireless communication with the first base station (20) to a wireless communication with the second base station (30), **characterized in that**
the cell reselecting unit is caused to execute the cell reselection process if the mobile communication terminal (40) fails to obtain local incoming information due to unsuccessful reception of the paging channel PCH, which is made by the system information receiving unit, after receiving a notification that incoming data exists by receiving the paging indicator PI within the system information received by the system information receiving unit within the first service area (21) .

6. A recording medium on which is recorded incoming data detecting program for causing a computer of a mobile communication terminal (40), which makes a wireless communication with at least one of a first base station (20) offering a first service area (21) and a second base station (30) offering a second service area (31), to function as:
a system information receiving unit for receiving, from the first base station (20) or the second base station (30), system information including a paging indicator PI within a paging indicator channel PICH and a paging channel PCH; and
a cell reselecting unit for executing a cell reselection process for switching from a wireless communication with the first base station (20) to a wireless communication with the second base station (30), **characterized by**
causing the computer of the mobile communication terminal (40) functioning as the the cell reselecting unit to execute the cell reselection process if the mobile communication terminal (40) fails to obtain local incoming information due to unsuccessful reception of the paging channel PCH, which is made by the system information receiving unit, after receiving a notification that incoming data exists by receiving the paging indicator PI within the system information received by the system information receiving unit within the first service area (21).

## Patentansprüche

1. Mobilkommunikationsendgerät (40), das eine drahtlose Kommunikation führt mit wenigstens einer von einer ersten Basisstation (20), die einen ersten Dienstbereich (21) bietet, und einer zweiten Basisstation (30), die einen zweiten Dienstbereich (31) bietet, umfassend:
eine Systeminformationsempfangseinheit zum Empfangen, von der ersten Basisstation (20) oder der zweiten Basisstation (30), von Systeminformationen, die einen Paging-Indikator PI enthalten, innerhalb eines Paging-Indikator-Kanals PICH, und eines Paging-Kanals PCH; und
eine Zellenreselektionseinheit zum Ausführen eines Zellenreselektionsprozesses zum Umschalten von einer drahtlosen Kommunikation mit der ersten Basisstation (20) auf eine drahtlose Kommunikation mit der zweiten Basisstation (30), **dadurch gekennzeichnet, dass**
die Zellenreselektionseinheit dafür ausgelegt ist, um den Zellenreselektionsprozess auszuführen, falls das Mobilkommunikationsendgerät (40) lokale ankommende Informationen nicht erhalten kann, aufgrund eines erfolglosen Empfangs des Paging-Kanals PCH, der durch die Systeminformationsempfangseinheit erfolgt, nach dem Empfang einer Meldung, dass ankommende Daten existieren, durch den Empfang des Paging-Indikators PI innerhalb der Systeminformationen, die durch die Systeminformationsempfangseinheit innerhalb des ersten Dienstbereiches (21) empfangen werden.

2. Mobilkommunikationsendgerät (40) nach Anspruch 1, bei dem
die Zellenreselektionseinheit den Zellenreselektionsprozess in einer Zeitperiode ab dem erfolglosen Empfang des Paging-Kanals PCH, der durch die Systeminformationsempfangseinheit erfolgt, bis zum Empfang eines neu gesendeten Paging-Indikators PI ausführt.

3. Mobilkommunikationsendgerät (40) nach Anspruch 1, ferner mit
einer Zellensucheinheit zum Ausführen eines Zellensuchprozesses zum Suchen nach einem dritten Dienstbereich, der durch eine dritte Basisstation, außer der ersten Basisstation (20) und der zweiten Basisstation (30), geboten wird, falls das Mobilkommunikationsendgerät (40) eine drahtlose Kommunikation nur mit der ersten Basisstation (20) führen kann, wenn das Mobilkommunikationsendgerät (40) lokale ankommende Informationen nicht erhalten kann, aufgrund des erfolglosen Empfangs des Paging-Kanals PCH, der durch die Systeminformationsempfangseinheit erfolgt, nach dem Empfang einer Meldung, dass ankommende Daten existieren, durch den Empfang des Paging-Indikators PI innerhalb der Systeminformationen, die durch die Systeminformationsempfangseinheit innerhalb des ersten Dienstbereiches (21) empfangen werden.

4. Mobilkommunikationsendgerät (40) nach Anspruch 3, bei dem
die Zellenreselektionseinheit einen Zellenreselektionsprozess zum Umschalten von der drahtlosen Kommunikation mit der ersten Basisstation (20) auf eine drahtlose Kommunikation mit der dritten Basisstation ausführt, falls eine Kommunikationsgüte mit der dritten Basisstation, die durch die Zellensucheinheit gesucht wird, höher als eine Kommunikationsgüte mit der ersten Basisstation (20) ist.

5. Verfahren zum Detektieren ankommender Daten, das in einem Mobilkommunikationsendgerät (40) ausgeführt wird, das eine drahtlose Kommunikation führt mit wenigstens einer von einer ersten Basisstation (20), die einen ersten Dienstbereich (21) bietet, und einer zweiten Basisstation (30), die einen zweiten Dienstbereich (31) bietet, umfassend:
Bewirken, dass eine Systeminformationsempfangseinheit von der ersten Basisstation (20) oder der zweiten Basisstation (30) Systeminformationen, die einen Paging-Indikator PI enthalten, innerhalb eines Paging-Indikator-Kanals PICH und einen Paging-Kanal PCH empfängt; und
Bewirken, dass eine Zellenreselektionseinheit einen Zellenreselektionsprozess zum Umschalten von einer drahtlosen Kommunikation mit der ersten Basisstation (20) auf eine drahtlose Kommunikation mit der zweiten Basisstation (30) ausführt, **dadurch gekennzeichnet, dass**
bewirkt wird, dass die Zellenreselektionseinheit den Zellenreselektionsprozess ausführt, falls das Mobilkommunikationsendgerät (40) lokale ankommende Informationen nicht erhalten kann, aufgrund des erfolglosen Empfangs des Paging-Kanals PCH, der durch die Systeminformationsempfangseinheit erfolgt, nach dem Empfang einer Meldung, dass ankommende Daten existieren, durch den Empfang des Paging-Indikators PI innerhalb der Systeminformationen, die durch die Systeminformationsempfangseinheit innerhalb des ersten Dienstbereiches (21) empfangen werden.

6. Aufzeichnungsmedium, auf dem ein Programm zum Detektieren ankommender Daten aufgezeichnet ist, zum Bewirken, dass ein Computer eines Mobilkommunikationsendgerätes (40), das eine drahtlose Kommunikation führt mit wenigstens einer von einer ersten Basisstation (20), die einen ersten Dienstbereich (21) bietet, und einer zweiten Basisstation (30), die einen zweiten Dienstbereich (31) bietet, fungiert als:
Systeminformationsempfangseinheit zum Empfangen, von der ersten Basisstation (20) oder der zweiten Basisstation (30), von Systeminformationen, die einen Paging-Indikator PI enthalten, innerhalb eines Paging-Indikator-Kanals PICH, und eines Paging-Kanals PCH; und
Zellenreselektionseinheit zum Ausführen eines Zellenreselektionsprozesses zum Umschalten von einer drahtlosen Kommunikation mit der ersten Basisstation (20) auf eine drahtlose Kommunikation mit der zweiten Basisstation (30), **gekennzeichnet durch**
Bewirken, dass der Computer des Mobilkommunikationsendgerätes (40) als Zellenreselektionseinheit fungiert, um den Zellenreselektionsprozess auszuführen, falls das Mobilkommunikationsendgerät (40) lokale ankommende Informationen nicht erhalten kann, aufgrund des erfolglosen Empfangs des Paging-Kanals PCH, der **durch** die Systeminformationsempfangseinheit erfolgt, nach dem Empfang einer Meldung, dass ankommende Daten existieren, **durch** den Empfang des Paging-Indikators PI innerhalb der Systeminformationen, die **durch** die Systeminformationsempfangseinheit innerhalb des ersten Dienstbereiches (21) empfangen werden.

## Revendications

1. Terminal de communication mobile (40) qui établit une communication sans fil avec au moins une d'une première station de base (20) desservant une première zone de desserte (21) et d'une deuxième station de base (30) desservant une deuxième zone de desserte (31), comprenant :
une unité de réception d'informations système destinée à recevoir, de la première station de base (20) ou de la deuxième station de base (30), des informations système incluant un indicateur de paging PI au sein d'un canal d'indicateur de paging (CIP) et d'un canal de paging (CP) ; et
une unité de resélection de cellule destinée à exécuter un processus de resélection de cellule pour commuter d'une communication sans fil avec la première station de base (20) à une communication sans fil avec la deuxième station de base (30), **caractérisé en ce que**
l'unité de resélection de cellule est conçue pour exécuter le processus de resélection de cellule si le terminal de communication mobile (40) ne réussit pas à obtenir d'informations entrantes locales en raison d'une réception manquée du canal de paging (CP), qui est réalisée par l'unité de réception d'informations système, après réception d'une notification indiquant que les données entrantes existent grâce à la réception de l'indicateur de paging IP à l'intérieur des informations système reçues par l'unité de réception d'informations système au sein de la première zone de desserte (21).

2. Terminal de communication mobile (40) selon la revendication 1, dans lequel
l'unité de resélection de cellule exécute le processus de resélection de cellule dans une période de temps allant de la réception manquée du canal de paging CP, qui est réalisée par l'unité de réception d'informations système, à la réception d'un indicateur de paging retransmis PI.

3. Terminal de communication mobile (40) selon la revendication 1, comprenant en outre
une unité de recherche de cellule pour exécuter un processus de recherche de cellule pour procéder à la recherche d'une troisième zone de desserte mise à disposition par une troisième station de base excepté pour la première station de base (20) et la deuxième station de base (30), si le terminal de communication mobile (40) peut établir une communication sans fil uniquement avec la première station de base (20) lorsque le terminal de communication mobile (40) ne réussit pas à obtenir d'informations entrantes locales en raison de la réception manquée du canal de paging (CP), qui est réalisée par l'unité de réception d'informations système, après réception d'une notification indiquant que les données entrantes existent grâce à la réception de l'indicateur de paging (IP) à l'intérieur des informations système reçues par l'unité de réception d'informations système au sein de la première zone de desserte (21).

4. Terminal de communication mobile (40) selon la revendication 3, dans lequel
l'unité de resélection de cellule exécute un processus de resélection de cellule pour commuter de la communication sans fil avec la première station de base (20) à une communication sans fil avec la troisième station de base, si un niveau de communication avec la troisième station de base recherchée par l'unité de recherche de cellule est supérieur à un niveau de communication avec la première station de base (20).

5. Procédé de détection de données entrantes exécuté dans un terminal de communication mobile (40) qui établit une communication sans fil avec au moins une d'une première station de base (20) mettant à disposition une première zone de desserte (21) et d'une deuxième station de base (30) mettant à disposition une deuxième zone de desserte (31), comprenant :
la réception par une unité de réception d'informations système, depuis la première station de base (20) ou la deuxième station de base (30), d'informations système comprenant un indicateur de paging (IP) à l'intérieur d'un canal d'indicateur de paging (CIP) et d'un canal de paging (CP) ; et
l'exécution par une unité de resélection de cellule d'un processus de resélection de cellule pour commuter d'une communication sans fil avec la première station de base (20) à une communication sans fil avec la deuxième station de base (30), **caractérisé en ce que**
l'unité de resélection de cellule est amenée à exécuter le processus de resélection de cellule si le terminal de communication mobile (40) ne réussit pas à obtenir d'informations entrantes locales en raison de la réception manquée du canal de paging (CP), qui est réalisée par l'unité de réception d'informations système, après réception d'une notification indiquant que les données entrantes existent grâce à la réception de l'indicateur de paging (IP) à l'intérieur des informations système reçues par l'unité de réception d'informations système au sein de la première zone de desserte (21).

6. Support d'enregistrement sur lequel est enregistré un programme de détection de données entrantes pour amener un ordinateur d'un terminal de communication mobile (40), qui établit une communication sans fil avec au moins une d'une première station de base (20) mettant à disposition une première zone de desserte (21) et d'une deuxième station de base (30) mettant à disposition une deuxième zone de desserte (31), à fonctionner comme :
une unité de réception d'informations système pour recevoir, de la première station de base (20) ou de la deuxième station de base (30), des informations système comprenant un indicateur de paging (IP) à l'intérieur d'un canal d'indicateur de paging (CIP) et d'un canal de paging (CP) ; et
une unité de resélection de cellule pour exécuter un processus de resélection de cellule pour commuter d'une communication sans fil avec la première station de base (20) à une communication sans fil avec la deuxième station de base (30), **caractérisé par**
le fonctionnement de l'ordinateur du terminal de communication mobile (40) en tant qu'unité de resélection de cellule pour exécuter le processus de resélection de cellule si le terminal de communication mobile (40) ne réussit pas à obtenir d'informations entrantes locales en raison de la réception manquée du canal de paging (CP), qui est réalisée par l'unité de réception d'informations système, après réception d'une notification indiquant que les données entrantes existent grâce à la réception de l'indicateur de paging (IP) à l'intérieur des informations système reçues par l'unité de réception d'informations système au sein de la première zone de desserte (21).
